# EUROPEAN PATENT APPLICATION

(11) **EP 2 608 008 A2**
(43) Date of publication of application: **26.06.2013**
(21) Application number: 12152948.1
(22) Date of filing: 27.01.2012
(51) Int. Cl.: G06F 3/0488, G01C 21/36, G06F 9/44

(54) **Method of presenting digital data on an electronic device operating under different environmental conditions**

(30) Priority: 23.12.2011 US 201113336117
(71) Applicant: QNX Software Systems Limited, Ottawa, Ontario K2M 1W8 (CA)
(72) Inventor: Poliak, Anthony, Andrew, Lake Stevens WA 98258 (US)
(74) Representative: Moore, Barry

(57) **Abstract**

An electronic device and a method for presenting structured data on the electronic device in different operating environments. The method includes selecting, from a plurality of presentation semantics associated with the structured data, a first set of presentation semantics in accordance with an operating environment of the electronic device; processing the structured data in accordance with the first set of presentation semantics; and presenting the structured data processed in accordance with the first set of presentation semantics using the electronic device.

## Description

### FIELD OF TECHNOLOGY

The present disclosure relates to electronic devices including, but not limited to, portable electronic devices that operate under different environmental conditions.

### BACKGROUND

Electronic devices, including portable electronic devices, have gained widespread use and may provide a variety of functions including, for example, telephonic, electronic messaging and other personal information manager (PIM) application functions. Portable electronic devices comprise several types of devices including mobile stations such as simple cellular telephones, smart telephones, Personal Digital Assistants (PDAs), tablet computers, and laptop computers, that may have wireless network communications or near-field communications connectivity such as Bluetooth® capabilities. In addition, electronic devices are also widely used in personal entertainment and infotainment systems, for example, portable media players and automobile infotainment systems.

Such electronic devices may be used under different operating environments. For example, a tablet computer may be used in an indoor environment, and outdoor environment as well in a commute environment, such as in an airplane, train, or an automobile. Typically, digital content is presented to a user of the electronic device without consideration for the operating environment of the electronic device. For example, digital content is presented on the electronic device in the same manner irrespective of whether the electronic device is stationary or in motion.

Improvements in the method of presenting digital content on electronic devices operating under different environmental conditions are desirable.

### BRIEF DESCRIPTION OF THE DRAWINGS

Embodiments of the present disclosure will now be described, by way of example only, with reference to the attached Figures, wherein:

FIG. 1 is a block diagram of a portable electronic device in accordance with an example embodiment;

FIG. 2 is a front view of an example of a portable electronic device;

FIG. 3 is a block diagram of a system for presenting structured content on an electronic device in different operating environments in accordance with the disclosure;

FIG. 4 is a flowchart illustrating a method for presenting structured content on an electronic device in different operating environments in accordance with the disclosure;

FIG. 5 is a flowchart illustrating a method of monitoring for changes to the operating environment of the electronic device and dynamically updating the presentation semantics used for processing the structured content;

FIG. 6A is an example pseudo code for the presentation of contents of an email application created using a markup language;

FIG. 6B is a table illustrating presentation semantics associated with an environmental factor applicable to the digital content of Fig. 6A; and

FIGS. 7A, &B and 7C are examples of presentation of structured content as applied to the example shown in FIG. 6A in accordance with presentation semantics shown in FIG. 6B.

### DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device. Examples of portable electronic devices include wireless communication devices such as pagers, mobile or cellular phones, smartphones, wireless organizers, PDAs, notebook computers, netbook computers, tablet computers, and so forth. The portable electronic device may also be a portable electronic device without wireless communication capabilities. Examples include handheld electronic game device, digital photograph album, digital camera, notebook computers, netbook computers, tablet computers, or other device. The electronic devices may also be a device used in personal entertainment and infotainment systems, for example, portable media players and automobile infotainment systems.

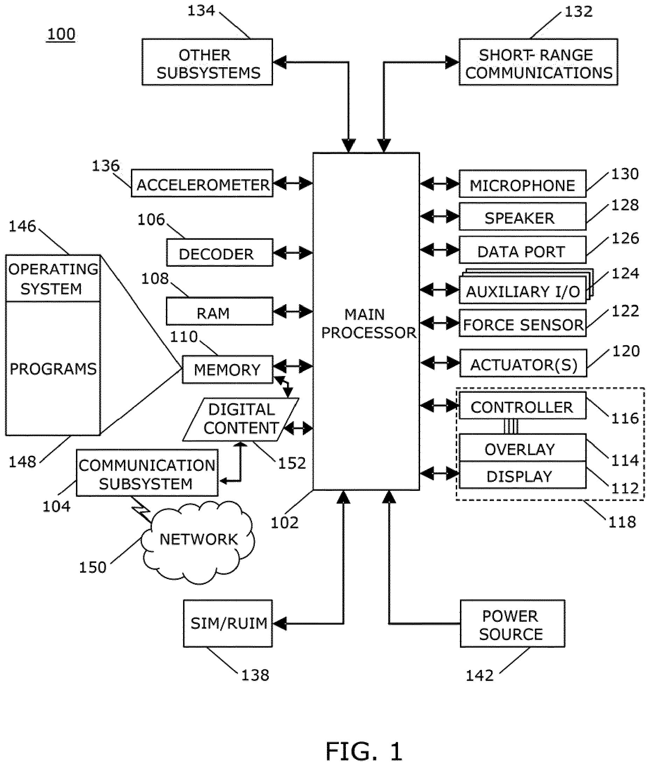

A block diagram of an example of a portable electronic device 100 is shown in FIG. 1. The portable electronic device 100 includes multiple components, such as a processor 102 that controls the overall operation of the portable electronic device 100. The portable electronic device 100 presently described optionally includes a communication subsystem 104 and a short-range communications 132 module to perform various communication functions, including data and voice communications. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 to detect direction of gravitational forces or gravity-induced reaction forces so as to determine, for example, the orientation or movement of the portable electronic device 100.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134. The memory 110 may also provide digital content 152 to the processor 102. The processor may process the digital content 152 for output to the display 112 or to the auxiliary I/O subsystem 124. The processor 102 may also provide digital content 152 for storage in the memory 110.

A received signal, such as a text message, an e-mail message, or web page download, is processed by the communication subsystem 104 and may be provided as digital content 152 to the processor 102. The processor 102 may process the digital content 152 for output to the display 112 and/or to the auxiliary I/O subsystem 124. A subscriber may generate digital content 152 such as data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example embodiment, the touch-sensitive display 118 is a capacitive touch-sensitive display that includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 112 of the touch-sensitive display 118 includes a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact, known as the centroid. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The location of the touch moves as the detected object moves during a touch. The controller 116 and/or the processor 102 may detect a touch by any suitable contact member on the touch-sensitive display 118. Similarly, multiple simultaneous touches are detected.

One or more gestures are also detected by the touch-sensitive display 118. A gesture is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 114 may evaluate swipes with respect to the origin point at which contact is initially made with the touch-sensitive overlay 114 and the end point at which contact with the touch-sensitive overlay 114 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 114 to initialize the gesture, a horizontal movement of the detected object from the origin point to an end point towards the right or left side of the touch-sensitive overlay 114 while maintaining continuous contact with the touch-sensitive overlay 114, and a breaking of contact with the touch-sensitive overlay 114. Similarly, a vertical swipe typically comprises an origin point towards the top or bottom of the touch-sensitive overlay 114 to initialize the gesture, a horizontal movement of the detected object from the origin point to an end point towards the bottom or top of the touch-sensitive overlay 114 while maintaining continuous contact with the touch-sensitive overlay 114, and a breaking of contact with the touch-sensitive overlay 114.

Swipes can be of various lengths, can be initiated in various places on the touch-sensitive overlay 114, and need not span the full dimension of the touch-sensitive overlay 114. In addition, breaking contact of a swipe can be gradual in that contact with the touch-sensitive overlay 114 is gradually reduced while the swipe is still underway.

Meta-navigation gestures may also be detected by the touch-sensitive overlay 114. A meta-navigation gesture is a gesture that has an origin point that is outside the display area of the touch-sensitive overlay 114and that moves to a position on the display area of the touch-sensitive display. Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area and moves to a position on the display area of the touch-sensitive overlay 114. Thus, two fingers may be utilized for meta-navigation gestures. Further, multi-touch meta-navigation gestures may be distinguished from single touch meta-navigation gestures and may provide additional or further functionality.

In some example embodiments, an optional force sensor 122 or force sensors is disposed in any suitable location, for example, between the touch-sensitive display 118 and a back of the portable electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

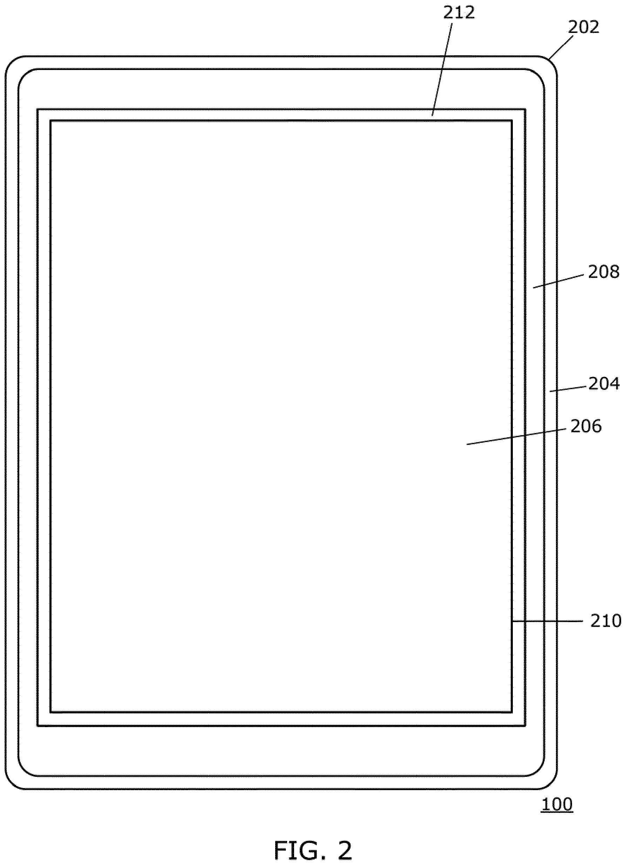

A front view of an example of the portable electronic device 100 is shown in FIG. 2. The portable electronic device 100 includes a housing 202 that encloses components such as shown in FIG. 1. The housing 202 may include a back, sidewalls, and a front 204 that frames the touch-sensitive display 118.

In the shown example of FIG. 2, the touch-sensitive display 118 is generally centered in the housing 202 such that a display area 206 of the touch-sensitive overlay 114 is generally centered with respect to the front 204 of the housing 202. The non-display area 208 of the touch-sensitive overlay 114 extends around the display area 206. A boundary 210 between the display area 206 and the non-display area 208 may be used to distinguish between different types of touch inputs, such as touches, gestures, and meta-navigation gestures. A buffer region 212 or band that extends around the boundary 210 between the display area 206 and the non-display area 208 may be utilized such that a meta-navigation gesture is identified when a touch has an origin point outside the boundary 210 and the buffer region 212 and crosses through the buffer region 212 and over the boundary 210 to a point inside the boundary 210. Although illustrated in FIG. 2, the buffer region 212 may not be visible. Instead, the buffer region 212 may be a region around the boundary 210 that extends a width that is equivalent to a predetermined number of pixels, for example. Alternatively, the boundary 210 may extend a predetermined number of touch sensors or may extend a predetermined distance from the display area 206. The boundary 210 may be a touch-sensitive region or may be a region in which touches are not detected.

As described earlier, the processor 102 processes digital content 152, such as a received text message, an e-mail message or the like for output to the display 112 or to the auxiliary I/O subsystem 124. Typically, digital content 152 is presented to a user of the electronic device without consideration for the operating environment of the electronic device. For example, digital content is presented on the electronic device in the same manner irrespective of whether the electronic device is stationary or in motion. As such, improvements in the method of presenting digital content on electronic devices operating under different environmental conditions are desirable. Specifically, controlling the presentation of digital content in response to environmental factors under which the electronic device is operating is desirable.

The following describes an electronic device and a method for presenting digital content on the electronic device in different operating environments without having the need to change the digital content itself. The method includes selecting, from a plurality of presentation rules associated with the digital content, a first set of presentation rules in accordance with an operating environment of the electronic device; processing the digital content in accordance with the first set of presentation rules; and presenting the digital content processed in accordance with the first set of presentation rules using the electronic device.

As used herein, "operating environment" of an electronic device is defined as the ambient conditions surrounding the electronic device at any given point of time. For example, the location of the electronic device, the lighting levels surrounding the electronic device, temperature, movement of the electronic device including change in acceleration, etc. The term also encompasses the condition of whether the electronic device is stationary or in motion with respect to its physical location. For example, an electronic device that is part of an automobile infotainment system may be considered to be stationary when the automobile is stationary and may be considered to be in motion when the automobile is in motion.

As used herein, "digital content" includes any structured data that is presented, in accordance with presentation semantics, to the user via the display or through an I/O subsystem of the electronic device. The digital content may be locally stored within the electronic device or may be received from external sources through wired or wireless means.

As used herein, "presentation semantics" is defined as a set of semantics or rules that control the presentation of structured data on the electronic device. The presentation semantics include, but are not limited to, formatting commands such as font size, color, shading, background, foreground, shadowing, visual and audio effects, timing control for animation etc. The term "presentation rules" is also used as an analogous term for presentation semantics.

A mark-up language is any language that supports annotating content, or structured data, using a syntax that is separate from the syntax of the structured data itself. The annotations (i.e., mark-ups) do not have to relate to the presentation rules or presentation semantics alone. However, in some mark-up languages, for example, HyperText Markup Language (HTML), the annotations may relate to presentation semantics, which may be advantageously used in the method described herein. In addition, the structured data and the presentation semantics may be included in a single file or may be in separate files, for example, the presentation semantics may be included in a Cascading Style Sheets (CSS) file.

The separation of structured data from presentation semantics has the advantage that the structured data is created once and can be optimized for presenting on a specific type of electronic device. For example, structured data created using a markup language can be optimized for presentation on a personal computer (typically having a large display), mobile phone (typically having a small display), or an automobile infotainment system or a tablet computer (typically having medium-sized display) etc. Thus, personal computers having large high-resolution displays are capable of displaying large amounts of text, whereas a handheld computer is capable of rendering a much smaller amount of text that can be meaningfully displayed to a user. In this example, each device uses the same structured data, but presents the structured data differently in a manner that is optimized having regard to the device dimensions and resources.

Electronic devices such as computers, mobile phones, automobile infotainment systems, etc., may have an array of environmental sensors (for example, GPS, velocity, light levels, camera etc.) available. Signals form the environmental sensors are used as inputs to applications in the system. For example, input from the accelerometer 136 may be used in gaming applications on portable electronic devices, for example in steering an automobile.

In another example, input from a camera is used to monitor the presence of a viewer in front of a display and the display is turned off if a viewer is not detected within a viewing area or if the viewer is too close to the display. In another example, ambient lighting levels around a display are monitored and, brightness and contrast levels are automatically adjusted in accordance with the measured lighting levels.

In automobile infotainment systems, certain features are enabled or disabled in accordance with whether the automobile is stationary or in motion. For example, video display is enabled when the automobile is stationary and may be disabled when the automobile is in motion.

The above examples use inputs from various environmental sensors to adapt the operation of the electronic device to the operating environment. Specifically, inputs from the environmental sensors are used as inputs to applications being executed on the electronic device (as in the gaming application and automobile infotainment system examples above) or to control the operation of various subsystems of the electronic device (as in the display control example above).

However, none of the aforementioned examples use inputs from the environmental sensors to control the selection of presentation semantics associated with the structured data to optimize the manner in which structured data is presented to the user having regard to the operating environment of the electronic device. Specifically, inputs from the environmental sensors are not used to select a set of presentation semantics to process the structured data and present the structured data processed in accordance with the selected presentation semantics as described herein.

According to an aspect, the signals from the environmental sensors, indicative of the operating environment of the device, are utilized as triggers to control the presentation of structured data on the electronic device. Advantageously, the structured data remains constant but the presentation is at least partially controlled by the environmental factors via the selection of appropriate presentation semantics.

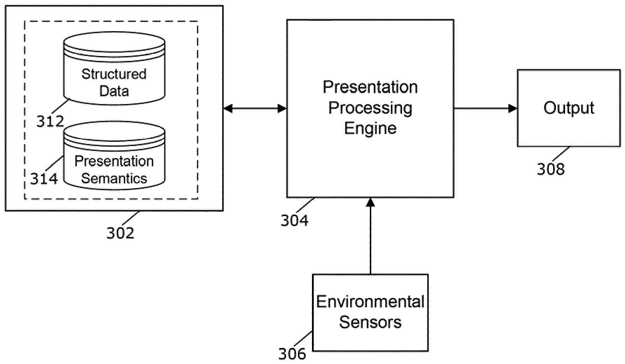

A block diagram of a system for presenting structured data on an electronic device, such as the portable electronic device 100, in different operating environments in accordance with the disclosure is shown in FIG. 3. Structured data 312 from a source 302 (internal or external to the electronic device) is processed by a presentation processing engine 304. The presentation processing engine 304 selects presentation semantics 314 associated with the structured data 312 in accordance with inputs from environmental sensors 306 and processes the structured data 312 accordingly. The presentation semantics 314 may be embedded within the structured data 312 as a single file or may be provided in a separate file. The processed structured data 312 is then presented on the output device 308, thus having regard to the operating environment of the electronic device. It is noted that the structured data 312 itself remains constant, but the manner in which the structured data 312 is presented to the user is changed to account for the various operating environments of the electronic device by selecting appropriate presentation semantics 314.

Digital content 152, for example, including structure data 312 and presentation semantics 314, may be stored in the memory 110 of the electronic device 100 or may be provided to the presentation processing engine 304 via wired or wireless means. For example, digital content 152 may be received from an external device that is tethered to the electronic device 100 or may be streamed from an external source via the wireless network 150. In other examples, the digital content 152 may be streamed to the electronic device using near-field communication protocols, such as Bluetooth® etc., using the short-range communications system 132.

The presentation processing engine 304 may be implemented within main processor 102 of the electronic device 100 or may be implemented as a separate processor within the electronic device 100. For the remainder of this disclosure, the functions of the presentation processing engine 304 are subsumed within the main processor 102 and reference is made only to the main processor 102.

The processed structured data may be presented to the user of the electronic device 100 via output means such as the display 112 or the speaker 128.

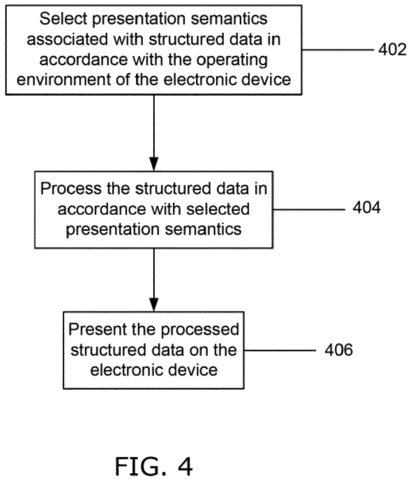

A flowchart illustrating a method of presenting digital content on an electronic device, such as the portable electronic device 100, is shown in FIG. 4. The electronic device is operable in different operating environments. The method may be carried out by computer-readable code executed, for example, by the processor 102. Coding of software for carrying out such a method is within the scope of a person of ordinary skill in the art given the present description. The method may contain additional or fewer processes than shown or described, and may be performed in a different order. The processor 102 selects presentation semantics 314 associated with the structured data 312 in accordance with the operating environment of the electronic device at 402. For example, the processor can select a first set of presentation semantics 314 from a plurality of presentation semantics. The processor 102 then processes the structured data 312 in accordance with the selected presentation semantics 314 at 404 and presents the processed structured data 312 on the electronic device 100 at 406.

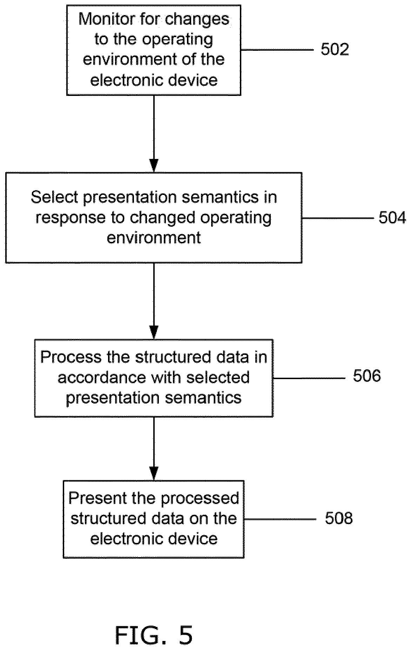

Figure 5 shows a flowchart illustrating a method of monitoring for changes to the operating environment of the electronic device and dynamically updating the presentation semantics used for processing the structured data. Various environmental sensors, such as accelerometers, light sensors, GPS, speedometer, etc. monitor for changes to the operating environment of the electronic device at 502. The monitoring may be performed continuously, periodically or randomly. Furthermore, certain applications may directly control one or more environmental sensors in accordance with a monitoring algorithm or based on user-defined preferences. Once a change in the operating environment is detected, the processor 102 selects presentation semantics 314 in response to the changed operating environment at 504. For example, the processor can select a second set of presentation semantics 314 from the plurality of presentation semantics. The processor 102 then processes the structured data 312 in accordance with the currently selected presentation semantics 314 at 506 and presents the processed structured data 312 on the electronic device 100 at 508. Processing the structured data 312 in accordance with the currently selected presentation semantics 314 at 506 may include re-processing structured data 312 that was previously processed using different presentation semantics 314.

The inputs from the environmental sensors may act as an assertive trigger to the processor 102 similar to an interrupt signal. The processor 102 then responds to the assertive trigger by selecting a new set of presentation rules 314 to reflect the changed operating environment and processes the structured data 312 in accordance with the new presentation semantics 314 and presents the processed structured data 312.

Alternatively, the processor 102 may poll the status of an environmental sensor. Upon detecting a change in the status indicative of a change in the operating environment of the electronic device 100, the processor may select further presentation semantics 314 and process the structured data 312 in accordance with the currently selected presentation semantics 314 for presentation. A combination of assertive triggers and the polling method may be employed for dynamically changing the manner in which the structured data 312 is presented on the electronic device responsive to changes in the operating environment of the electronic device.

The process may be carried out in any suitable application, such as, a home screen application, an email application, a text messaging application, a calendar application, a tasks application, an address book application, a web browser application, or any other suitable application that presents digital content on the electronic device. Structured data may include visual content or audio content. The presentation semantics may be specific to visual content (visual content presentation semantics), audio content (audio content presentation semantics), or to both. The structured data may be presented visually on the display 118 or through an audio output, such as the speaker 128, of the portable electronic device 100.

The presentation of digital content that is for a particular operating environment of the electronic device can be accomplished in several ways. For example, the presentation of structured data can be controlled by Cascaded Style Sheets (CSS). CSS may be used in conjunction with an HTML file, which provides the structured data. The CSS may provide style instructions, such as formatting of the structured data, for the presentation of the structured data that is optimized for a specific electronic device. In this example, an HTML <div> tag is used to group content together into different sections with a specified label. A CSS can then be used to render the structured data within that label in a specific manner. The HTML file and CSS may be separate so that different CSS can be applied to a common HTML file. Alternatively, CSS can be embedded within the HTML file. CSS is typically used to style the structured data for different display sizes, coloring, etc. as shown in the example below.

```
 HTML
 <div class ="content">Hello</div>
 CSS
 DIV.content
 {
          Formatting commands;
 }
```

The content "Hello" is presented in accordance with the formatting commands of the CSS DIV.Content file.

The following examples illustrate the method of presenting structured data on an electronic device in different operating environments.

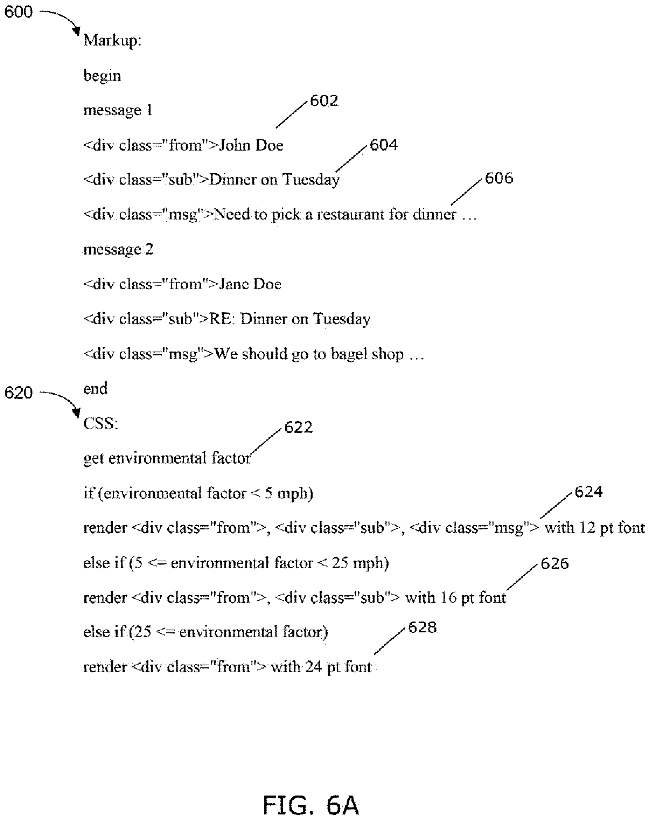

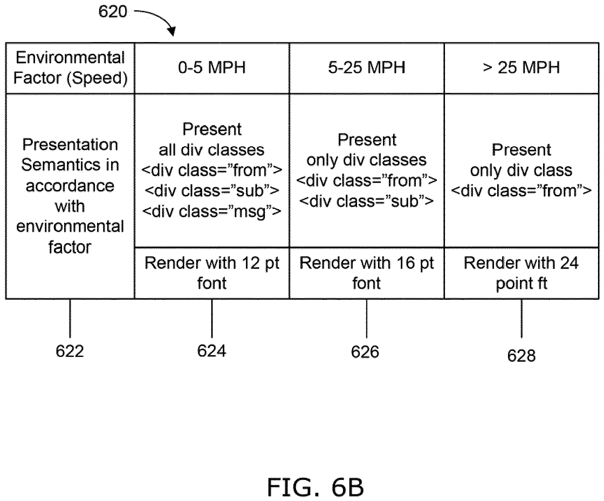

Figure 6A is an example pseudo code for the presentation of contents 600 of an email application created using a markup language. The CSS file 620 comprises a plurality of presentation semantics 624, 626, 628 associated with the contents 600 for an example environmental factor i.e., the speed of the automobile 622, as described below with reference to FIG. 6B. HTML <div> tags are used to group content together into different sections, for example, <div class = "from"> 602 to identify the sender of an email; <div class = "sub"> 604 to identify a subject of the email; and <div class = "msg"> 606 to identify a message body of the email.

In accordance with the described method, contents 600 of the email application can be adapted for presentation on the display of an automobile infotainment system without changes to the content specifically for this purpose by selecting various presentation semantics 622, 624, 626, 628 from the CSS file 620. For example, the amount of content rendered on the display of the system may be increased or reduced responsive to the speed of the vehicle in order to assist and/or not to distract the driver.

Figure 6B is a tabular representation of the CSS file 620 illustrating presentation semantics associated with an environmental factor, i.e., the speed of the automobile 622. The presentation semantics 624, 626, 628 are applicable to the digital content of FIG. 6A. i.e., the email application. Specifically, the presentation semantics correspond to various values associated with the environmental factor 622: presentation semantics 624 correspond to speed values in the range of 0-5 MPH; presentation semantics 626 correspond to speed values in the range of 5-25 MPH; and presentation semantics 628 correspond to speed values above 25 MPH.

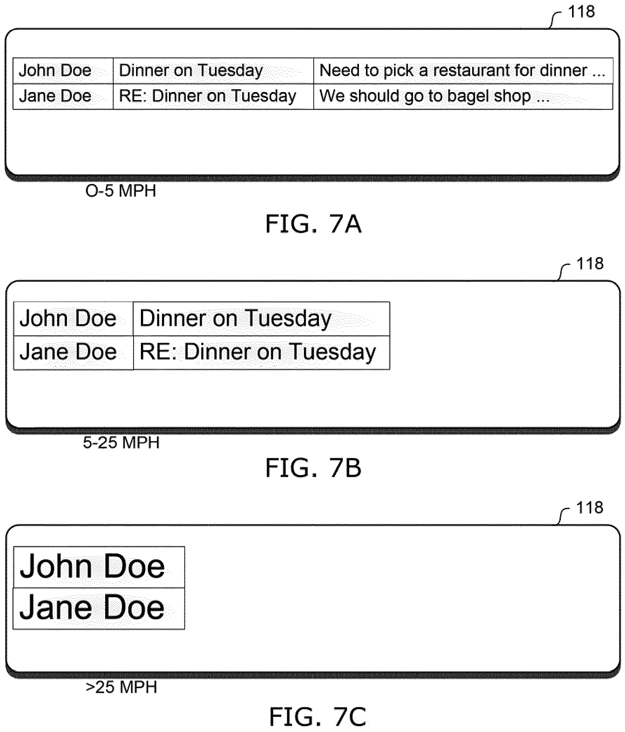

When the automobile is stationary or is moving at a low speed (for example, less than 5 MPH), the entire content of the email message may be displayed without causing distraction to the driver of the automobile. Accordingly, the presentation semantics 624 permit all HTML <div> classes to be presented on the display 118 of the electronic device, as shown in Fig. 7A.

As the automobile starts to move and gather speed, the processor 102 receives input form an environmental sensor (for example, the speedometer of the automobile, a GPS system, etc.) indicating a change in the operating environment of the electronic device. When the speed of the automobile is over 5 MPH but less than 25 MPH, the processor 102 selects presentation semantics 626 to process the contents of the email. The contents of the email processed in accordance with presentation semantics 626 is shown in Fig. 7B. Since presentation semantics 626 allow only <div class = "from"> and <div class = "sub"> to be presented, the message body of the email identified by <div class = "msg"> is not presented on the display 118.

When the automobile starts to travel at a speed greater than 25 MPH, the signal from the speedometer or the GPS system causes the processor 102 to select presentation semantics 628. The contents of the email are now processed in accordance with presentation semantics 628 and presented as shown in Fig. 7C. Since presentation semantics 628 allow only <div class = "from"> to be presented, the subject and message body of the email identified by <div class = "sub"> and <div class = "msg">, respectively, are not presented on the display 118.

It should be noted that the presentation semantics 624, 626, and 628 also include a formatting command that controls the font size of the contents that is rendered. For example, presentation semantics 624 stipulate that the contents be rendered with 12 pt font; presentation semantics 626 stipulate that the contents be rendered with 16 pt font; and presentation semantics 628 stipulate that the contents be rendered with 24 pt font. Thus, the presentation semantics can be a function of a value associated with an environmental trigger indicative of an operating environment of the electronic device. In the above example, contents of the email were not only selected based on the <div> tags, but the font size at which the selected <div> tags were rendered was also scaled in accordance with the speed of the automobile.

It should further be noted that in the above example, the contents of the email remain constant, only the presentation is varied having regard to the operating environment of the electronic device.

Additional presentation semantics can be utilized wherein video content is presented only when the automobile is stationary and is disabled or not presented when the automobile is in motion. For example, the signal from the speedometer or the GPS system may cause the processor 102 to select presentation semantics that prohibit video content and allow only the presentation of textual content to the user.

In another example, the number of selection or response options presented to the driver may be controlled using environmental triggers. For example, the signal from the speedometer or the GPS system may cause the processor 102 to select presentation semantics that limit the number of options presented to the driver to four options when the automobile is in motion.

In another example, location and time information provided by a GPS system of an electronic device can be used to estimate the general amount of natural light surrounding the device. The input from these sensors may cause the processor 102 to select appropriate presentation semantics that change the color scheme or contrast of the display to improve the visibility of the presented content. Additionally, inputs from a camera embedded in the electronic device may enhance the determination of ambient light. The camera inputs may then cause the processor 102 to select appropriate presentation semantics for optimizing the presentation of the structured data on the electronic device 100.

In another example, the presentation semantics may remain the same, but the values associated with formatting commands may change with a change in the operating environment of the electronic device. For example, ambient sound levels can be detected using microphone 130 of the electronic device 100. The input from the microphone may be used by the processor 102 to increase or decrease the output level of the audio portion of the structured data. In the automobile infotainment example, as the speed of the automobile increases, the environmental sensor (in this case, the microphone 130) could detect increased noise levels and hence cause the processor 102 to select presentation semantics that increase the output level of the audio portion of the structured data.

In another example, background themes on the electronic device can be automatically changed responsive to the location or context. For example, a camera on an electronic device can be used to identify the background against which a display of the electronic device is viewed. The input from the environmental sensor (in this case, the camera) may be used to trigger the processor 102 to change or to select a set of presentation semantics that automatically changes the theme on the display 112 to enhance the contrast responsive to the background.

In another example, presentation of visual content on the display 112 of the electronic device 100 can be stabilized in response to movements of the electronic device. For example, inputs from an accelerometer 136 may be used to determine motion of the electronic device. The input from the accelerometer 136 may then cause the processor 102 to select presentation semantics that compensate for the movement of the electronic device thereby providing image stability. This is useful when the electronic device is used while the user is walking or running so that the presented content does not appear to bounce.

In another example, the processor 102 can select presentation semantics based on expected changes to the operating environment of the electronic device. For example, weather information, traffic information, road conditions, etc may be used to determine expected changes to the operating environment of an automobile infotainment system. The processor can accordingly automatically select presentation semantics associated with the operating environment that is expected and accordingly process the structured data for presentation. For example, if heavy traffic or inclement weather conditions are expected, the environmental sensors (for example, a navigation system capable of receiving traffic and/or weather updates in real time) may trigger the processor to select new presentation semantics in accordance with the expected changes to the road/driving conditions. The processor would then process the structured data in accordance with the new presentation semantics to present the content on the automobile infotainment system.

The above examples use environmental factors to trigger changes to the manner in which the structured data is presented. The environmental factors can be added as parameters to the structured data in order to act as triggers. Any changes in these parameters can be set to automatically trigger an update in the selection of presentation semantics. The structured data is then automatically re-processed with the updated presentation rule(s) and represented, if required, on the electronic device. Advantageously, it is not necessary to create new content to take into account the changes in the environmental factors or the operating environment of the electronic device.

There are several different ways to provide the presentation semantics. The presentation semantics can be directly embedded into the structured data created using a markup language, for example, within the header. Alternatively, the presentation semantics can be included in a master file, for example, a master CSS file. The master CSS file can then be loaded in the memory of individual electronic devices. The processor may call on the master CSS file, during processing, to select the appropriate presentation semantics responsive to the input from the environmental sensors indicative of the operating environment of the electronic device.

In another example, individual style sheets containing the presentation semantics can be created for a specific electronic device. A browser (or an application) presenting the structured data may be used to create specific parameters from the environmental factors. These parameters can be passed into the logic in the style sheet. The style sheet logic may then determine the appropriate presentation semantics for presenting the structured data in accordance with the received parameters indicative of the operating environment of the electronic device.

The presentation semantics may be selected from one or more style sheets in accordance with the environmental factors. Alternatively, the presentation semantics may be selected from a single style sheet depending on the environmental factors. In other cases, the presentation semantics may be selected by following a particular path within the embedded presentation semantics in the structured data.

It is noted that the above method is not limited to HTML and CSS. Some digital content can be created using a markup language without device specificity. Selection and application of the appropriate presentation semantics may optimize the digital content for individual devices having different characteristics.

According to one aspect, there is provided a method for presenting structured data on an electronic device in different operating environments. The method comprises: selecting, from a plurality of presentation semantics associated with the structured data, a first set of presentation semantics in accordance with an operating environment of the electronic device; processing the structured data in accordance with the first set of presentation semantics; presenting the structured data processed in accordance with the first set of presentation semantics using the electronic device.

In an example embodiment, the method further comprises monitoring the operating environment of the electronic device for changes to the operating environment; selecting, from the plurality of presentation semantics, a second set of presentation semantics, in accordance with the changed operating environment of the electronic device; processing the structured data in accordance with the second set of presentation semantics; and presenting the structured data processed in accordance with the second set of presentation semantics using the electronic device.

The second set of presentation semantics may be selected in response to an expected change in the operating environment of the electronic device.

The structured data may be created using a markup language. The markup language may be any of: HyperText Markup Language (HTML), Extensible Markup Language (XML), and Synchronized Multimedia Integration Language (SMIL).

The plurality of presentation semantics may be embedded in the structured data. The plurality of presentation semantics may be provided in one or more style files. The one or more style files may be cascading style sheet (CSS) files.

The structured data may include multi-media content and the plurality of presentation semantics may include audio content presentation semantics and visual content presentation semantics. Selecting the first set of presentation semantics may include selecting a first set of audio content presentation semantics or a first set of visual content presentation semantics. Presenting the structured data processed in accordance with the first set of presentation semantics may include: rendering a visual portion of the multi-media content on a display of the electronic device.

The operating environment of the electronic device may be determined by one or more of: speed of the electronic device, location of the electronic device, current time, and lighting conditions in which the electronic device is operating.

The plurality of presentation semantics may include device-specific presentation semantics.

According to another aspect, there is provided an electronic device for presenting structured data. The electronic device comprises a processor and an output device. The processor is configured to: select, from a plurality of presentation semantics associated with the structured data, a first set of presentation semantics in accordance with an operating environment of the electronic device; process the structured data in accordance with the first set of presentation semantics. The output device is configured to present the structured data processed in accordance with the first set of presentation semantics.

The electronic device may further comprise one or more sensors configured to monitor the operating environment of the electronic device for changes to the operating environment and to provide information pertaining to changes in the operating environment to the processor.

The processor may be further configured to: select, from the plurality of presentation semantics, a second set of presentation semantics in accordance with the changed operating environment of the electronic device; and, process the structured data in accordance with the second set of presentation semantics. The output device may be further configured to present the structured data processed in accordance with the second set of presentation semantics.

The processor may be configured to select the second set of presentation semantics responsive to an expected change in the operating environment of the electronic device.

The structured data may comprise multi-media content. The processor may include a presentation processing engine configured to process the structured data. The output device may include a display configured to present a visual portion of the structured data and an audio output configured to present an audio portion of the structured data.

The electronic device may further comprise a receiver to receive the structured data from an external source.

According to another aspect, there is provided a computer-readable medium having tangibly recorded thereon a set of non-transitory instructions for execution by an electronic device having a processor and an output device, the non-transitory instructions for carrying out a method for presenting structured data on the electronic device in different operating environments. The method comprises: selecting, from a plurality of presentation semantics associated with the structured data, a first set of presentation semantics in accordance with an operating environment of the electronic device; processing the structured data in accordance with the first set of presentation semantics; presenting the structured data processed in accordance with the first set of presentation semantics using the electronic device.

According to another aspect, there is provided a method for presenting structured data on an electronic device in different operating environments. The method comprises: selecting, from a plurality of presentation semantics associated with the structured data, a first set of presentation semantics in response to a change in an operating environment of the electronic device; processing the structured data in accordance with the first set of presentation semantics; presenting the structured data processed in accordance with the first set of presentation semantics using the electronic device.

Selecting the first set of presentation semantics may comprise: configuring one or more sensors to monitor the change in the operating environment of the electronic device; generating a trigger indicative of the change in the operating system of the electronic device; and selecting the first set of presentation semantics in response to the generated trigger.

Configuring the one or more sensors to monitor the change in the operating environment of the electronic device may comprise periodically monitoring the operating environment of the electronic device for changes to the operating environment.

Configuring the one or more sensors to monitor the change in the operating environment of the electronic device may comprise polling the one ore more sensors to monitor the operating environment of the electronic device for changes to the operating environment.

Configuring the one or more sensors to monitor the change in the operating environment of the electronic device may comprise continuously monitoring the operating environment of the electronic device for changes to the operating environment.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope. In some instances, features of the method and/or the device have been described with respect to different embodiments. It is understood that all the features described herein may be included in a single embodiment, where feasible.

## Claims

1. A method for presenting structured data on an electronic device (100) in different operating environments, the method comprising:
selecting (402), from a plurality of presentation semantics associated with the structured data, a first set of presentation semantics in accordance with an operating environment of the electronic device;
processing (404) the structured data in accordance with the first set of presentation semantics;
presenting (406) the structured data processed in accordance with the first set of presentation semantics using the electronic device.

2. The method of claim 1, further comprising:
monitoring the operating environment of the electronic device for changes to the operating environment (502);
selecting, from the plurality of presentation semantics, a second set of presentation semantics, in accordance with the changed operating environment of the electronic device (504);
processing the structured data in accordance with the second set of presentation semantics (506); and
presenting the structured data processed in accordance with the second set of presentation semantics using the electronic device (508).

3. The method of claim 2, wherein the second set of presentation semantics is selected responsive to an expected change in the operating environment of the electronic device.

4. The method of any one of preceding claims, wherein the structured data is created using a markup language.

5. The method of claim 4, wherein the markup language is any of: HyperText Markup Language (HTML), Extensible Markup Language (XML), and Synchronized Multimedia Integration Language (SMIL).

6. The method of any one of preceding claims, wherein the plurality of presentation semantics are embedded in the structured data.

7. The method of any one of claims 1 to 5, wherein the plurality of presentation semantics are provided in one or more style files.

8. The method of claim 7, wherein the one or more style files are cascading style sheet (CSS) files.

9. The method of any one of preceding claims, wherein the structured data includes multi-media content and the plurality of presentation semantics includes audio content presentation semantics and visual content presentation semantics.

10. The method of claim 9, wherein selecting the first set of presentation semantics includes selecting a first set of audio content presentation semantics or a first set of visual content presentation semantics.

11. The method of claim 9, wherein presenting the structured data processed in accordance with the first set of presentation semantics includes:
rendering a visual portion of the multi-media content on a display of the electronic device.

12. The method of any one of preceding claims, wherein the operating environment of the electronic device is determined by one or more of: speed of the electronic device, location of the electronic device, current time, and lighting conditions in which the electronic device is operating.

13. The method of any one of preceding claims, wherein the plurality of presentation semantics includes device-specific presentation semantics.

14. An electronic device (100) for presenting structured data, the electronic device comprising:
a processor (102) configured to execute the method of any one of claims 1 to 13.

15. A computer-readable medium having tangibly recorded thereon a set of non-transitory instructions for execution by an electronic device (100) having a processor (102) and an output device, the non-transitory instructions for carrying out a method for presenting structured data on the electronic device in different operating environments in accordance with any one of claims 1 to 13.
